# DEMANDE DE BREVET EUROPEEN

(11) **EP 4 772 714 A1**
(43) Date de publication de la demande: **08.07.2026**
(21) Numéro de dépôt: 26150320.5
(22) Date de dépôt: 06.01.2026
(51) Int. Cl.: E06B 9/00, H02G 7/00, H02J 1/00, H02J 7/35, H02S 40/30, H02S 40/34, H02S 40/38, H02G 3/10, E06B 9/68, H02G 3/08

(54) **DISPOSITIF DE COMMANDE MANUELLE ALIMENTE PAR UN MODULE PHOTOVOLTAÏQUE INTEGRÉ**

(30) Priorité: 07.01.2025 FR 2500124
(71) Demandeur: Somfy Activites SA, 74300 Cluses (FR)
(72) Inventeur: SOURIVONG, Justin, 74300 CLUSES (FR); ROUSSEAU, Fabien, 74300 CLUSES (FR); D'URSO, Nicolas, 74300 CLUSES (FR); DESAGRE, Thomas, 74300 CLUSES (FR); MATEOS, Raphaël, 74300 CLUSES (FR)
(74) Mandataire: Bugnion Genève

(57) **Abrégé**

Dispositif de commande manuelle (10) comprenant : un socle, un bouton de commande (6) monté sur le socle et permettant l'application manuelle d'un effort d'appui par l'utilisateur du dispositif de commande manuelle (10) pour provoquer l'émission d'un ordre de commande, une unité électronique (4) comprenant un transmetteur d'ordres de commande, une source lumineuse (62) et une réserve d'énergie (20). Le dispositif de commande manuelle (10) comprend une zone centrale (12) délimitée au moins en partie par le bouton de commande (6) et un module photovoltaïque (30) alimentant la réserve d'énergie (20) et une plateforme du module photovoltaïque (30), montée sur le socle, le module photovoltaïque (30), comprenant une partie centrale active et un pourtour translucide délimitant la partie centrale active et étant positionné de sorte à recouvrir au moins une partie de la plateforme, la plateforme comprenant au moins une zone de transmission lumineuse, apte à transmettre la lumière, agencée entre la source lumineuse et le pourtour du module photovoltaïque (30) en configuration assemblée du dispositif de commande manuelle (10).

## Description

### DOMAINE TECHNIQUE ET ART ANTÉRIEUR

La présente invention concerne un dispositif de commande manuelle domotique destiné à la commande distante par radiofréquences d'un ou plusieurs récepteurs commandant une ou plusieurs charges électriques dans un bâtiment, cette ou ces charges électriques étant destinées au confort thermique, visuel ou lumineux, à la protection solaire, à la fermeture ou à la sécurité du bâtiment ou de ses abords.

Un tel dispositif de commande manuelle est par exemple de type fixe, sous la forme d'un point de commande mural ou mobile, par exemple une télécommande. Le dispositif de commande manuelle est alimenté de manière autonome, par une batterie, elle-même rechargée par un module photovoltaïque.

Le dispositif de commande manuelle peut transmettre des ordres d'un utilisateur et/ou peut comprendre un capteur pour transmettre des données issues de ce capteur, utilisées par le ou les récepteurs commandant la ou les charges électriques. Le dispositif de commande manuelle peut également être récepteur de données, c'est-à-dire combiner l'émission et la réception.

Il est connu d'utiliser des dispositifs de commande manuelles autonomes en énergie. Par exemple, la demande de brevet FR2948488 décrit un dispositif de commande manuelle radio incluant un module photovoltaïque sur une majeure partie de la surface d'une touche de commande. La surface du module photovoltaïque est ainsi maximisée. Une telle disposition permet d'obtenir une surface photovoltaïque importante.

En revanche, rien dans cette demande n'est prévu pour un retour d'information vers l'utilisateur, par exemple par une diode électroluminescente.

La demande de brevet FR3126138 décrit par ailleurs un dispositif de commande manuelle présentant une forme extérieure circulaire. La zone d'appui périphérique comprend une ou plusieurs zones d'appui, sur lesquelles un utilisateur peut exercer une pression pour provoquer l'émission d'un ordre de commande. L'effort de rappel nécessaire pour cette ou ces zones d'appui est réalisé grâce à un élément torique.

L'adaptation d'une alimentation par un dispositif de stockage d'énergie rechargeable par un module photovoltaïque d'un tel dispositif de commande manuelle tout en permettant un retour d'information vers l'utilisateur n'est pas triviale.

Le but de l'invention est de fournir un dispositif de commande manuelle remédiant aux inconvénients précités et améliorant les dispositifs de commande manuelle connus de l'art antérieur. En particulier, l'invention permet la réalisation d'un dispositif de commande manuelle autonome en énergie, répondant aux contraintes esthétiques relatives à des formes circulaires et susceptible d'une réalisation industrielle simple.

### EXPOSÉ DE L'INVENTION

L'invention concerne pour cela un dispositif de commande manuelle, le dispositif de commande manuelle comprenant : un socle, un bouton de commande monté sur le socle et permettant l'application manuelle d'un effort d'appui par l'utilisateur du dispositif de commande manuelle pour provoquer l'émission d'un ordre de commande, le dispositif de commande manuelle comprenant également une unité électronique comprenant un transmetteur d'ordres de commande, une source lumineuse et une réserve d'énergie (20), le dispositif de commande manuelle comprenant une zone centrale délimitée au moins en partie par le bouton de commande. Le dispositif de commande manuelle comprend un module photovoltaïque alimentant la réserve d'énergie et une plateforme du module photovoltaïque, montée sur le socle, le module photovoltaïque, comprenant une partie centrale active et un pourtour translucide délimitant la partie centrale active et étant positionné de sorte à recouvrir au moins une partie de la plateforme la plateforme comprenant au moins une zone de transmission lumineuse, apte à transmettre la lumière, agencée entre la source lumineuse et le pourtour du module photovoltaïque en configuration assemblée du dispositif de commande manuelle.

Ainsi, pour un dispositif de commande manuelle comprenant une zone centrale totalement ou majoritairement recouverte par le module photovoltaïque, un retour d'information lumineux est possible au niveau de cette zone centrale.

On s'assure ainsi de pouvoir agencer le retour lumineux au niveau de la zone centrale, ce qui permet d'éviter des contraintes d'agencement du retour lumineux sur d'autres parties du dispositif de commande. Ainsi, la surface photosensible peut également être optimisée tout en permettant une installation simple du module photovoltaïque.

Dans un exemple de réalisation, le module photovoltaïque présente une succession de couches laminées comprenant au moins une couche avant, une couche intermédiaire intégrant au moins une cellule photovoltaïque active et une couche arrière disposant de liaisons électriques adaptées au raccordement du module photovoltaïque au circuit électronique du dispositif de commande manuelle, la couche avant et la couche arrière se rejoignant pour former le pourtour du module photovoltaïque.

Un tel module photovoltaïque est ainsi formé par différentes couches assemblées entre elles, le ou les cellules photovoltaïques étant encapsulées entre deux couches protectrices qui, assemblées entre elles, forment le pourtour. Les deux couches protectrices étant translucides, voire transparentes, le contour est également translucide ou transparent.

On utilise avantageusement une technologie de module photovoltaïque dont les formes peuvent être variées, qui ont un rendement moins important que d'autres technologies, mais qui peuvent produire de l'énergie même sans ensoleillement direct ou sous un faible éclairage, ce qui est particulièrement intéressant pour des dispositifs de commande manuelle classiquement utilisés à l'intérieur d'un bâtiment et donc rarement soumis à un ensoleillement direct.

La technologie utilisée pour la fabrication des cellules solaires actives permet ainsi facilement de produire un panneau solaire avec un bon potentiel de production d'énergie électrique sous faible éclairement.

Avantageusement, la couche avant et la couche arrière du module photovoltaïque sont des films plastiques, encapsulant la couche intermédiaire et assurant l'étanchéité de cette couche intermédiaire par leur adhésion entre elle au niveau du pourtour.

La forme du module photovoltaïque est ainsi adaptée au critère de forme du dispositif de commande dans lequel le bouton de commande et donc la zone centrale est circulaire.

De manière générale, dans ce mode de réalisation, la forme des couches avant/arrière du module photovoltaïque suit de façon homothétique la forme des couches intermédiaires.

Dans un exemple de réalisation, la zone de transmission lumineuse est une partie de la plateforme réalisée en matériau translucide.

La plateforme peut ainsi être réalisée en polycarbonate ou en PET (polyéthylène téréphtalate) et éventuellement être complètement translucide. La plateforme participe ainsi à conduire la lumière depuis la source lumineuse vers le pourtour du module photovoltaïque.

Dans un autre exemple de réalisation, la zone de transmission lumineuse est formée par au moins un trou dans la plateforme.

Selon un mode de réalisation alternatif, la plateforme est en matériau imperméable à la lumière, mais au moins un trou est formé dans la plateforme pour que celle-ci puisse être traversée par la lumière issue de la source lumineuse.

Avantageusement, le dispositif de commande manuelle comprend un guide de lumière comprenant une entrée positionnée en vis-à-vis de la source lumineuse et une sortie qui est, en configuration assemblée du dispositif de commande manuelle, agencée en vis-à-vis de la au moins une zone de transmission lumineuse prévue dans la plateforme.

Selon un mode de réalisation, la source lumineuse appartenant à l'unité électronique est mise en relation avec un guide lumière pour conduire le flux lumineux vers le pourtour du module photovoltaïque au travers de la plateforme translucide ou d'un trou formé dans la plateforme. Ce mode de réalisation permet ainsi de manière simple de former un ou plusieurs points lumineux ponctuels sur le pourtour du module photovoltaïque à partir d'une source lumineuse qui peut être installée plus facilement.

La zone de transmission lumineuse est par exemple sous forme d'une portion d'anneau s'étendant le long d'un bord de la plateforme.

Plutôt qu'une zone de transmission lumineuse ponctuelle, la zone de transmission lumineuse peut s'étendre le long d'une partie du pourtour du module photovoltaïque.

Le guide lumière peut comprendre une portion d'anneau en matériau conducteur de lumière et des moyens de renvoi de lumière dans une direction perpendiculaire à la courbure de la portion d'anneau.

L'agencement du guide de lumière permet ainsi de propager le flux lumineux vers une face avant du dispositif de commande manuelle, le long d'une portion étendue (non ponctuelle), notamment correspondant à une portion étendue de la zone de transmission lumineuse.

Avantageusement, les moyens de renvoi de lumière diffusent la lumière de la source lumineuse sur une portion d'anneau de 100° à 170°.

Selon ce mode de réalisation, l'arrangement du guide lumineux permet de fournir un premier retour lumineux sur un premier demi-anneau et un deuxième retour lumineux sur une deuxième demi-anneau.

Dans un exemple de réalisation, le dispositif de commande manuelle comprend un guide de lumière dont une entrée est positionnée en vis-à-vis de la diode électroluminescente et tel que le guide de lumière traverse la plateforme au niveau de la zone de transmission lumineuse.

Dans le cas où la zone de transmission lumineuse comprend un trou dans la plateforme, la source lumineuse appartenant à l'unité électronique est associée avec un guide lumière qui traverse la plateforme au niveau du trou pour conduire le flux lumineux au plus près du pourtour du module photovoltaïque. La conduction lumineuse se fait ainsi sans rupture de matière.

La sortie du guide lumineux peut ainsi être montée au plus près du pourtour du module photovoltaïque et assurer une meilleur diffusion du flux lumineux sur une partie du pourtour du module photovoltaïque.

Le guide lumière peut comprendre une pluralité de plots de conduction lumineuse, les différents plots étant supportés et reliés entre eux par un anneau de support.

Ainsi, le guide de lumière peut être constitué de plusieurs plots, guidant individuellement la lumière reçue d'un émetteur lumineux correspondant positionné sur le circuit imprimé, l'anneau de support permettant une intégration mécanique plus facile du guide lumière dans son ensemble, sous la plateforme. L'anneau de support permet également de garantir un positionnement des différents plots les uns par rapport aux autres et par rapport aux sources lumineuses.

Selon une caractéristique additionnelle, l'unité électronique comprend un circuit imprimé positionné sur le socle et sous la plateforme.

Le circuit imprimé de l'unité électronique est disposé de manière fixe sur le socle, ce qui permet de faire correspondre la position de l'émetteur lumineux, monté sur le circuit imprimé sous la plateforme, avec le guide de lumière agencé au-dessus de la plateforme.

De la même manière, des connexions électriques du module photovoltaïque monté sur la plateforme peuvent être agencées sur le circuit imprimé et correspondre à une zone de connexion du module photovoltaïque.

Selon une autre caractéristique additionnelle, la plateforme comprend une surface de support et un rebord périphérique, le module photovoltaïque étant logé sur la surface de support et à l'intérieur du rebord périphérique.

Ainsi, le module photovoltaïque est logé dans la plateforme et l'assemblage du dispositif de commande manuelle est facilité.

De plus, dans les différents modes de réalisation du guide lumineux, la surface de support de la plateforme, le socle ou le circuit imprimé sont non visibles depuis la face avant du dispositif de commande manuelle.

Selon une autre caractéristique additionnelle, le pourtour translucide du module photovoltaïque présente une surface texturée

La surface texturée du pourtour du module photovoltaïque permet de diffuser la lumière issue du guide de lumière et de masquer la source.

Dans un exemple, la zone centrale est entourée par un bouton de commande basculant. Le module photovoltaïque occupe alors une place fixe vis-à-vis du socle et du dispositif de commande manuelle, ce qui facilite son intégration, notamment son positionnement par rapport aux connexions électriques et aux émetteurs lumineux.

Dans un autre exemple, la zone centrale est entourée par un bouton de commande basculant.

Le module photovoltaïque occupe alors une place mobile vis-à-vis du socle, ce qui maximise la surface disponible pour le module photovoltaïque.

### DESCRIPTION DES FIGURES

L'invention sera mieux comprise à la lecture de la description qui va suivre, donnée uniquement à titre d'exemple et faite en se référant aux dessins annexés sur lesquels :
- La figure 1 est une représentation schématique d'une vue de face d'un premier mode de réalisation d'un dispositif de commande manuelle selon l'invention.
- La figure 2 est une vue éclatée représentée schématiquement d'un exemple de réalisation d'un module photovoltaïque adapté dispositif de commande manuelle selon l'invention.
- La figure 3 est une vue en perspective représentée schématiquement d'un premier mode de réalisation d'une plateforme du module photovoltaïque du dispositif de commande manuelle de la figure 1.
- La figure 4 est une vue en perspective représentée schématiquement d'un premier exemple de réalisation d'un guide de lumière d'un dispositif de commande manuelle selon l'invention.
- La figure 5 est une vue de face représentée schématiquement d'un deuxième exemple de réalisation d'un guide de lumière d'un dispositif de commande manuelle selon l'invention.
- La figure 6 est une vue en perspective d'une partie du guide lumière de la figure 5.

### DESCRIPTION DETAILLÉE DE L'INVENTION

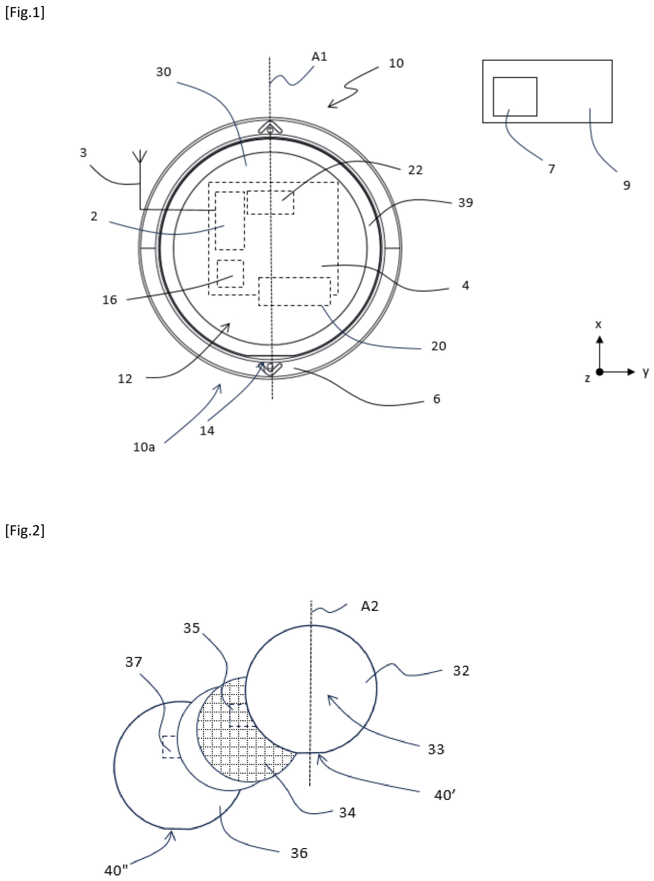

L'invention est relative à un dispositif de commande manuelle 10, dont des modes et exemples de réalisation sont notamment visibles en figures 1 à 6.

La figure 1 représente un mode de réalisation d'un dispositif de commande manuelle 10 utilisant l'invention. Ce dispositif de commande manuelle 10 domotique autonome comprend une unité électronique 4 incluant une unité radiofréquence 2 (par exemple de type émetteur et/ou de type récepteur) raccordée à une antenne 3. L'unité radiofréquence permet au dispositif de commande manuelle 10 de communiquer, par radiofréquences, avec au moins un récepteur 7 associé à une ou plusieurs charges électriques commandables 9 dans un bâtiment, cette ou ces charges électriques 9 étant destinées au confort thermique, visuel ou lumineux, à la protection solaire, à la fermeture ou à la sécurité du bâtiment ou de ses abords.

Dans l'exemple suivant, le dispositif de commande manuelle 10 se présente sous la forme d'un point de commande mural, commandant un volet roulant ou un écran de protection solaire. Alternativement, le dispositif de commande manuelle 10 est apte à être tenu par la main d'un utilisateur ou posé sur un meuble.

Pour des raisons esthétiques et de cohérence de gamme, le dispositif de commande manuelle 10 présente une forme extérieure globalement circulaire. Il peut être entouré par un plastron (non représenté) dont la forme extérieure est indépendante de la forme extérieure du dispositif de commande manuelle.

Le dispositif de commande comporte un boîtier de forme circulaire comprenant un fond ou socle (non représenté) supportant une interface active 18. Dans le cas d'un dispositif fixé au mur, le socle est configuré pour permettre cette fixation.

L'unité électronique 4 du dispositif de commande manuelle 10 comprend également une unité de commande (non représentée), par exemple un microcontrôleur, raccordée à l'unité radiofréquences 2. Dans le cas d'un dispositif de commande manuelle 10 de type émetteur, les données transmises par l'unité de commande sont transformées en signaux radioélectriques par l'unité radiofréquence 2 pour être appliquées à l'antenne 3.

Le dispositif de commande manuelle 10 comprend également un bouton de commande 6, associé à un ou plusieurs interrupteurs (non représentés)de l'unité électronique 4. Ainsi, des ordres provoqués manuellement par un utilisateur en agissant sur le bouton de commande 6 et donc sur au moins un des interrupteurs, sont générés et transmis depuis le dispositif de commande manuelle 10 vers les charges électriques 9 à commander.

Le bouton de commande 6 délimite une zone centrale 12 circulaire du dispositif de commande 10, qui peut être associée à un autre interrupteur 28 pour une autre fonction de commande que celle ou celles prévues par le bouton de commande 6.

L'interface active 18 comporte notamment l'unité électronique 4, le bouton de commande 6 en périphérie et, sur sa face extérieure, un module photovoltaïque 30 dans la zone centrale 12. L'interrupteur 28 est positionné sous le module photovoltaïque 30.

Le bouton de commande 6 dispose d'au moins un degré de liberté par rapport au socle, à l'encontre d'un élément de rappel (non représenté) élastique, réalisé sous la forme d'un élément torique sous contrainte. Lorsque le bouton de commande 6 est déplacé, par un appui d'un utilisateur, un interrupteur (non représenté) est activé, ce qui provoque l'émission d'un ordre de commande. L'élément de rappel élastique force le retour du bouton de commande dans une position de repos stable.

Le dispositif de commande manuelle 10 est alimenté par une réserve d'énergie 20, elle-même connectée pour sa recharge à un module photovoltaïque 30. La réserve d'énergie 20 peut être un condensateur de stockage ou un accumulateur. Eventuellement, l'unité électronique 4 comprend un circuit adaptateur de tension, celui-ci permettant une charge optimale de la réserve d'énergie 20 en fonction de l'éclairement auquel est soumis le module photovoltaïque 30. L'unité électronique 4 se présente sous la forme d'un circuit imprimé positionné sur le socle.

L'unité électronique 4 peut également comprendre au moins un capteur 16, par exemple un capteur de température ou d'humidité.

L'unité électronique 4 comprend également une zone de connexion, apte à assurer la connexion électrique avec le module photovoltaïque 30.

Pour optimiser le rendement, on cherche à maximiser la taille du module photovoltaïque 30. Celui-ci se présente sous la forme d'un module photovoltaïque et est monté sur le dispositif de commande manuelle 10. La zone centrale 12 circulaire du dispositif de commande manuelle 10 délimitée par le bouton de commande 6 est particulièrement adaptée à être recouverte par le module photovoltaïque 30.

Par la suite, les termes « module de cellules solaire » et « module photovoltaïque » sont utilisés indifféremment.

Certaines technologies photovoltaïques et procédés de fabrication permettent aujourd'hui de développer des cellules photovoltaïques flexibles et de formes variées, dont des formes circulaires. C'est notamment le cas du procédé mis en œuvre avec la technologie de cellules solaires à pigment photosensible (en langue anglaise DSSc ou Dye-Sensitized Solar cell).

De telles cellules sont par exemple décrites dans les documents US5084365, WO2020141252 ou WO2023094288A1.

Les cellules à pigment photosensible permettent d'adapter la forme du module photovoltaïque 30 aux contraintes de la zone centrale 12. Elles présentent aussi l'avantage de pouvoir produire de l'énergie même sans ensoleillement direct ou sous un faible éclairage. Ceci est particulièrement intéressant pour l'alimentation de dispositifs installés dans un bâtiment, rarement soumis à un éclairage naturel direct. Ainsi, bien que n'étant pas les plus performantes du marché, ces cellules présentent des avantages indéniables dans l'application concernée par l'invention.

Un module photovoltaïque 30 pouvant alimenter la réserve d'énergie 20 est ainsi formé d'un module photovoltaïque 30 sensiblement circulaire. Celui-ci est notamment basé sur cette technologie de cellules solaires à pigment photosensible. Un tel module photovoltaïque 30 est représenté schématiquement en figure 2.

Le module photovoltaïque 30 ainsi produit est notamment composé d'un ensemble de couches individuelles, comprenant, par exemple, au moins:
- une couche avant 32 de protection,
- une ou plusieurs couches intermédiaires 34 intégrant une ou plusieurs cellules photovoltaïques actives et des électrodes 35,
- une couche arrière 36 de protection, disposant également de liaisons électriques 37, par exemple des pastilles adaptées au raccordement des électrodes 35 au circuit électronique du dispositif de commande manuelle 10.

La couche avant 32 et la couche arrière 36 sont scellées l'une à l'autre le long d'un bord d'étanchéité 39 sur leurs bords périphériques, sur le pourtour extérieur de la ou des couches intermédiaires, de sorte à encapsuler la ou les couches intermédiaires et à étanchéifier le module photovoltaïque 30.

Au moins une couche intermédiaire comprend des électrodes, en contact avec la ou les cellules actives, et qui sont également mises en contact lors de l'assemblage des différentes couches entre elles, avec des liaisons électriques 37 de la couche arrière 36 de protection. Les liaisons électriques 37 sont ainsi situées à l'arrière du module photovoltaïque et peuvent être reliées, par exemple avec une nappe libre pour assurer la connexion électrique avec l'unité électronique 4. Notamment, les liaisons électriques 37 sont sous la forme de pastilles rigides, traversant la couche arrière de connexion pour être mises en contact avec les électrodes.

Alternativement, les liaisons électriques 37 sont en contact direct avec l'unité électronique 4.

Pendant le montage du module photovoltaïque 30 sur le dispositif de commande manuelle 10, il est nécessaire d'aligner la position des liaisons électriques 37 de la couche arrière 36 avec des zones de connexion du circuit électronique du dispositif de commande. Or dans le cas d'un module photovoltaïque 30 et celle de la zone centrale 12 du dispositif de commande qui le reçoit de formes sensiblement circulaires, cet alignement peut être complexe.

En particulier, selon un premier exemple de réalisation visible aux figures 1 et 2, une zone interne 14 est matérialisée par un segment circulaire de la zone centrale 12, autrement dit, la zone centrale 12 est divisée en une zone centrale tronquée, par exemple le long d'un segment ou corde de cercle, et en la zone interne 14. Cette division ou méplat est avantageusement perpendiculaire à l'axe A1, qui forme un axe de symétrie pour le bouton de commande 6, ou du moins symétriquement par rapport à l'axe A1.

Ainsi, selon un mode de réalisation, lors de la fabrication, au moins chacune des couches avant et arrière du module photovoltaïque 30 et éventuellement une ou plusieurs couches intermédiaires sont prévues sous forme de disque tronqué correspondant à la forme de la zone centrale 12, muni d'une troncature initiale 40', 40", qui s'inscrit dans un segment ou un secteur circulaire de ce disque. Une orientation principale est définie sur un axe A2.

Lors de l'assemblage des couches, celles-ci sont alignées les unes par rapport aux autres pour former une troncature 40 du module photovoltaïque 30. Cette troncature 40 permet, lors de la mise en place du module photovoltaïque dans la zone centrale, d'indexer le module photovoltaïque 30 par rapport à la zone interne 14 du dispositif de commande manuelle 10, plus particulièrement d'aligner la position des liaisons électriques 37 de la couche arrière 36 avec des zones de connexion du circuit électronique du dispositif de commande.

Le module est avantageusement fixé à la plateforme par des moyens adhésifs, par exemple au moyen d'une colle ou au moyen d'un adhésif double face.

Dans ce mode de réalisation, la forme extérieure du module photovoltaïque 30 est globalement circulaire à l'exception d'un segment droit, c'est-à-dire que le module photovoltaïque 30 a un pourtour circulaire fermé par un segment droit. Ainsi, la troncature 40 du module photovoltaïque 30 est réalisée par retrait d'un segment circulaire par rapport à un disque, ayant un périmètre dans lequel s'inscrit le module photovoltaïque 30.

Ce mode de réalisation est simple, il permet une indexation entre le module photovoltaïque 30 et la zone centrale 12 par coopération suivant l'axe A2, celui-ci étant perpendiculaire au segment droit. Le positionnement parallèle du méplat de la zone centrale 12 et du segment droit du module photovoltaïque 30 permet l'orientation du module photovoltaïque 30 dans la zone centrale 12, par rapport à la zone interne 14.

Le bord d'étanchéité 39 du module photovoltaïque 30, également appelé pourtour, réalisé par la jonction entre la couche avant 32 et la couche arrière 36, est translucide.

Ainsi, alors que la zone centrale 12 du dispositif de commande manuelle 10 est totalement ou majoritairement recouverte par le module photovoltaïque 30, ce bord d'étanchéité est utilisé à des fins de retour d'information lumineux au niveau de cette zone centrale 12.

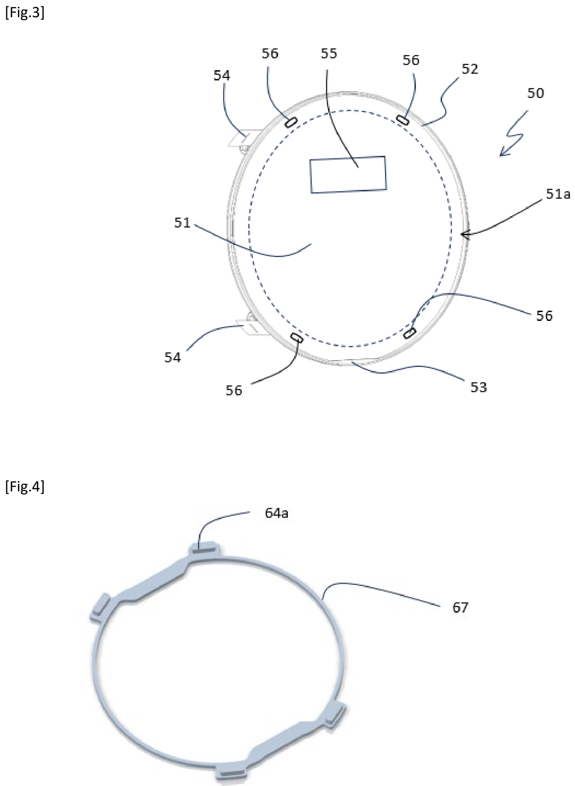

La figure 3 représente un premier mode de de mise en œuvre d'un retour lumineux au niveau de la zone centrale 12 du dispositif de commande manuelle 10.

Le dispositif de commande manuelle 10 comprend une plateforme 50 du module photovoltaïque 30. Cette plateforme 50 est montée fixe sur le socle, au-dessus de l'unité électronique 4, par exemple à l'aide de pattes de montage 54, dont deux sont représentées. En particulier, les pattes de montage 54 peuvent être clipsées sur le socle. L'unité électronique 4 se présente sous la forme d'un circuit imprimé positionné sur le socle.

La plateforme 50 comprend une surface de support 51 munie d'un rebord 52, formant un contour extérieur du socle et une surépaisseur 53 locale sur la surface de support 51, le module photovoltaïque 30 étant reçu à l'intérieur du rebord 52 et sa découpe 40 coopérant avec la surépaisseur 53 du socle.

La surface de support 51 de la plateforme 50 a une épaisseur relativement constante et fine de sorte à être élastiquement déformable. A sa périphérie, du fait de la présence du rebord 52 périphérique, la plateforme 50 est relativement rigide.

En son centre, correspondant au centre C du dispositif de commande manuelle 10, la plateforme comprend un pion 57, s'étendant à partir de la surface plane 51 dans la direction inverse à celle du rebord 52 périphérique. Ce pion permet d'activer un interrupteur (non représenté) et donc de disposer d'une fonction de commande équivalent à celle des dispositifs de commande manuelle connus dans des versions non rechargeables. Le module photovoltaïque 30 est avantageusement également déformable, ce qui permet à un utilisateur d'activer l'interrupteur au travers de l'ensemble constitué du module photovoltaïque 30 et de la plateforme 50.

La plateforme 50 comprend dans sa surface supérieure 51 un évidement 55, lequel est disposé en vis-à-vis, lorsque le dispositif de commande manuelle 10 est assemblé, d'une part des connexions électriques 37 du module photovoltaïque 30 et d'autre part de la zone de connexion 22 de l'unité électronique 4.

De manière avantageuse, la surépaisseur 53 locale a une hauteur sensiblement égale à l'épaisseur du module photovoltaïque 30, de sorte que lorsque le panneau solaire est reçu sur la plateforme 50, sa surface affleure avec la surface de la surépaisseur 53. L'ensemble constitué par le module photovoltaïque 30 et la plateforme 50 présente ainsi une surface uniforme. Cette surépaisseur 53 peut être réalisée de matière avec la surface supérieure 51 de la plateforme 50 ou être formée par une pièce rapportée sur la surface supérieure 51 de la plateforme 50.

Cette surépaisseur 53 correspond à la zone interne 14. Le rebord 52 permet de caler le module photovoltaïque 30 dans la zone centrale 12 et d'indexer sa position dans le dispositif de commande manuelle 10.

La zone périphérique 51a de la plateforme en vis-à-vis du bord périphérique 39 du module photovoltaïque s'étend entre le rebord périphérique 52 de la plateforme et un trait en pointillés matérialisant la limite entre le bord périphérique 39 et la couche active 34 du module photovoltaïque 30.

Dans ce premier mode de réalisation, la plateforme 50 comprend également une zone de transmission lumineuse 56 sous la forme d'un trou débouchant à la surface supérieure de la plateforme, dans la zone périphérique 51a. Ce trou est traversant.

Cette zone de transmission fait partie d'un dispositif de retour lumineux. En particulier, ce dispositif de retour lumineux comprend en outre une source lumineuse 62 , par exemple sous la forme d'une diode électroluminescente, disposée devant une entrée 66 d'un guide lumineux 64.

Le trou formé à travers la plateforme 50 et débouchant dans la surface supérieure 51 est en vis-à-vis d'une sortie 67 du guide lumineux.

Ainsi, le guide lumineux peut s'étendre uniquement sous la plateforme ou rejoindre la surface supérieure 51 de la plateforme 50 en comblant totalement ou partiellement le trou 56.

L'unité électronique 4, en fonction des besoins de retour d'information vers un utilisateur, peut gérer l'allumage ou l'extinction de la diode électroluminescente 62, le flux lumineux étant alors visible sur la face avant 10a du dispositif de commande manuelle 10, au niveau de la zone périphérique de la plateforme et au niveau du pourtour 39 du module photovoltaïque 30, le flux lumineux empruntant le guide lumineux 64 et le trou 56 et débouchant contre le pourtour translucide du module photovoltaïque 30.

En particulier, la diode électroluminescente et le guide de lumière 64 forment la source lumineuse 62. Celle-ci est avantageusement positionnée sur le circuit imprimé de l'unité électronique 4.

Selon un premier exemple de réalisation, la plateforme comprend plusieurs trous 56 espacés les uns des autres le long de la zone périphérique 51a. Ceux-ci coopèrent avec une pluralité de plots de conduction lumineuse 64a, ceux-ci étant montés au moins par paires sur un anneau de support 67. Le guide lumineux 64 est monté sur la plateforme.

Chacun des plots 64a pénètre la plateforme 50 au niveau des trous 56 correspondants. La surface des guides de lumières affleure alors avec la surface supérieure 51 de la plateforme 50.

Les plots 64 et la zone périphérique 51a sont recouverts par le pourtour 39 du module photovoltaïque 30. Celui-ci agit comme conducteur de lumière et/ou diffuseur. Le dispositif de retour lumineux est sous forme de zones lumineuses ponctuelles.

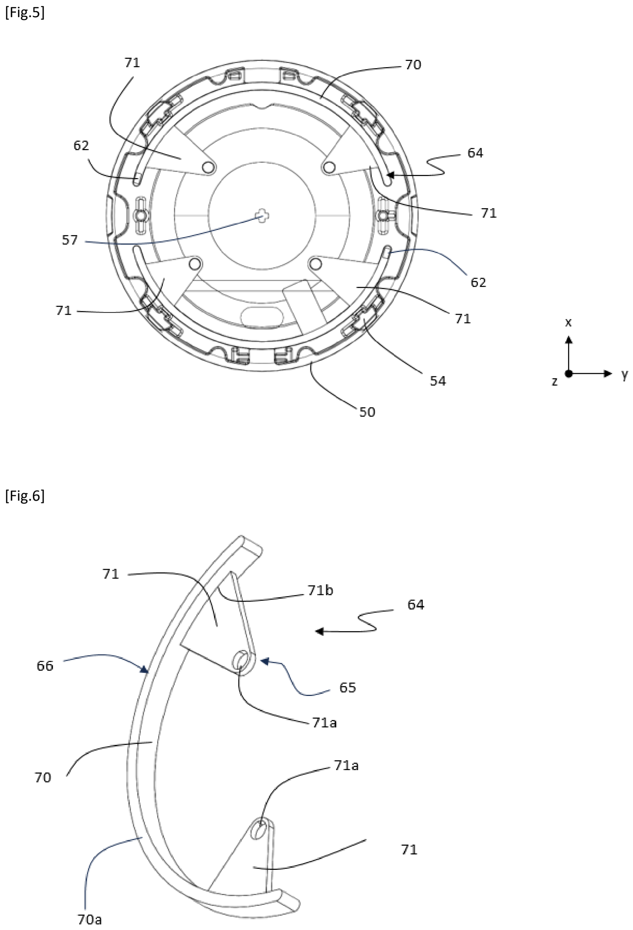

Selon un deuxième exemple de réalisation représenté aux figures 5 et 6, le guide de lumière 64 se présente sous la forme d'une portion d'anneau 70. Une diode électroluminescente se situe en vis-à-vis d'une première extrémité de la portion d'anneau 70. Dans cet exemple, au moins une patte 71 s'étendant radialement est attachée à l'anneau et comportant au niveau d'une première extrémité de la patte 71 un œillet 71a, permettant de connecter mécaniquement la patte à la plateforme 50 , tandis que la deuxième extrémité de la patte 71 est rattachée à la portion d'anneau au niveau d'une jonction 71b. L'ensemble peut être réalisé de matière.

En variante, les deux portions d'anneau sont remplacées par un anneau unique. Deux parois imperméables sont prévues entre deux portions d'anneau pour séparer les flux lumineux dans un mode de réalisation à deux boutons.

D'autres moyens pour fixer l'anneau à la plateforme sont envisageables.

Ainsi, la lumière émise par la diode électroluminescente 62 se transmet le long de la portion d'anneau 70 et est guidée vers une surface supérieure 70a de la portion d'anneau 70. La surface supérieure 70a de la portion d'anneau correspond ainsi à la sortie 66 du guide lumineux 64.

Ainsi, le guide lumineux 64 de cet exemple de réalisation dispose de parois de renvoi permettant de de guider le flux lumineux dans une direction z perpendiculaire à la courbure de la portion d'anneau 70, le long de cette portion d'anneau 70 notamment sur un angle de 100° à 170 °.

Ce guide lumineux 64 coopère avec une plateforme 50 dans laquelle la zone de transmission lumineuse 56 est étendue, notamment étendue sur une zone au moins équivalente à la surface supérieure 70a de la portion d'anneau. La zone de transmission lumineuse peut être un trou dans la plateforme ou une portion translucide.

La zone de transmission lumineuse peut ainsi comprendre au moins une lumière courbe (non représentée) le long de la zone périphériques 52a.

Selon un deuxième mode de réalisation, la plateforme 50 est réalisée en matériau translucide.

La plateforme 50 peut ainsi être réalisée en polycarbonate ou PET et éventuellement être complètement translucide. La plateforme 50 participe ainsi à conduire la lumière depuis la sortie du guide lumière 64 vers le pourtour 39 du module photovoltaïque 30, quel que soit le guide lumière utilisé.

Dans le cas où une pluralité de sources lumineuses sont utilisées, il est possible de faire en sorte d'émettre un signal lumineux au niveau d'une zone périphérique 52a à proximité d'un bouton de commande 6 dès que celui-ci est activé.

Ainsi, dans le cas d'un dispositif de commande disposant de plusieurs boutons de commande 6, il est ainsi possible de fournir un retour d'information lumineux à un utilisateur dès qu'il active un des boutons.

Alternativement, un signal lumineux peut être émis de manière intermittente pour indiquer à un utilisateur que l'ordre de commande, émis par l'activation du bouton de commande 6 correspondant, est en cours de réalisation, ou a bien été exécuté.

Dans les différents exemples présentés, le pourtour 39 du module photovoltaïque peut être translucide et lisse. Alternativement, sa surface peut être texturée, par exemple granuleuse, ceci permettant de diffuser la lumière issue du guide de lumière 64 et de masquer la source lumineuse 62.

La face avant 10a du dispositif de commande manuelle 10 est ainsi partagée entre une zone en vis-à-vis du module photovoltaïque 30, permettant de capter l'énergie solaire et une zone destinée à l'information lumineuse.

Dans un exemple avantageux, la ou les cellules solaires sont semi-transparentes. Elles sont par exemple du type cellules solaires organiques ou OPV (Organic PhotoVoltaic).

Dans un exemple de réalisation, d'autres indicateurs lumineux, tels qu'un ou plusieurs écrans ou une ou plusieurs diodes électroluminescentes ou LEDs peuvent être positionnés à l'arrière de la cellule solaire pour fournir un retour d'information lumineux à un utilisateur, en utilisant les propriétés de semi-transparence de la cellule solaire organique.

### RÉFÉRENCES

- 2: unité radiofréquences
- 3: antenne
- 4: unité électronique
- 6: bouton de commande
- 7: récepteur
- 9: charge électrique commandable
- 10: dispositif de commande manuelle
- 12: zone centrale
- 14: zone interne
- 16: capteur
- 20: réserve d'énergie
- 22: zone de connexion
- 30: module photovoltaïque
- 32: couche avant
- 34: couche intermédiaire
- 35: électrodes
- 36: couche arrière
- 37: connexions électriques
- 39: bord d'étanchéité ou pourtour (translucide)
- 40: découpe
- 40': découpe initiale couche avant
- 40": découpe initiale couche arrière
- 50: plateforme
- 51: surface supérieure
- 51a: zone périphérique
- 52: rebord
- 53: surépaisseur
- 54: patte de montage
- 55: évidement
- 56: zone de transmission lumineuse
- 57: pion
- 62: diode électroluminescente
- 64: guide lumineux
- 65: entrée du guide lumineux
- 66: sortie du guide lumineux
- 64a: plots de conduction lumineuse
- 67: anneau de support
- 70: portion d'anneau
- 71: extension
- 71a: œillet
- 71b: jonction

## Revendications

1. Dispositif de commande manuelle (10), le dispositif de commande manuelle (10) comprenant : un socle, un bouton de commande (6) monté sur le socle et permettant l'application manuelle d'un effort d'appui par l'utilisateur du dispositif de commande manuelle (10) pour provoquer l'émission d'un ordre de commande, le dispositif de commande manuelle (10) comprenant également une unité électronique (4) comprenant un transmetteur d'ordres de commande, une source lumineuse (62) et une réserve d'énergie (20), le dispositif de commande manuelle (10) comprenant une zone centrale (12) délimitée au moins en partie par le bouton de commande (6), **caractérisé en ce que** le dispositif de commande manuelle (10) comprend un module photovoltaïque (30) alimentant la réserve d'énergie (20) et une plateforme (50) du module photovoltaïque (30), montée sur le socle, le module photovoltaïque (30), comprenant une partie centrale active et un pourtour translucide délimitant la partie centrale active et étant positionné de sorte à recouvrir au moins une partie de la plateforme (50), la plateforme (50) comprenant au moins une zone de transmission lumineuse (56), apte à transmettre la lumière, agencée entre la source lumineuse (62) et le pourtour du module photovoltaïque (30) en configuration assemblée du dispositif de commande manuelle (10).

2. Dispositif de commande manuelle (10) selon la revendication 1, **caractérisé en ce que** le module photovoltaïque (30) présente une succession de couches laminées comprenant au moins une couche avant (32), une couche intermédiaire (34) intégrant au moins une cellule photovoltaïque active et une couche arrière (36) disposant de liaisons électriques (37) adaptées au raccordement du module photovoltaïque (30) au circuit électronique du dispositif de commande manuelle (10), la couche avant (32) et la couche arrière (36) se rejoignant pour former le pourtour du module photovoltaïque (30).

3. Dispositif de commande manuelle (10) selon l'une des revendications précédentes, **caractérisé en ce que** la zone centrale et le module photovoltaïque sont sensiblement circulaires.

4. Dispositif de commande manuelle (10) selon l'une des revendications 1 à 3, **caractérisé en ce que** la zone de transmission lumineuse (56) est une partie de la plateforme (50) réalisée en matériau translucide.

5. Dispositif de commande manuelle (10) selon l'une des revendications 1 à 3, **caractérisé en ce que** la zone de transmission lumineuse (56) est formée par au moins un trou dans la plateforme (50).

6. Dispositif de commande manuelle (10) selon l'une des revendications précédentes, **caractérisé en ce qu'**il comprend un guide de lumière (64) comprenant une entrée (65) positionnée en vis-à-vis de la source lumineuse (62) et une sortie (66) qui est, en configuration assemblée du dispositif de commande manuelle (10), agencée en vis-à-vis de la au moins une zone de transmission lumineuse (56) prévue dans la plateforme (50).

7. Dispositif de commande manuelle (10) selon la revendication précédente, **caractérisé en ce que** la zone de transmission lumineuse est sous forme d'une portion d'anneau s'étendant le long d'un bord de la plateforme.

8. Dispositif de commande manuelle (10) selon la revendication précédente, **caractérisé en ce que** le guide lumière comprend une portion d'anneau (70) en matériau conducteur de lumière et des moyens de renvoi de lumière dans une direction (z) perpendiculaire à la courbure de la portion d'anneau (70).

9. Dispositif de commande manuelle (10) selon la revendication précédente, **caractérisé en ce que** les moyens de renvoi de lumière diffusent la lumière de la source lumineuse (62) sur une portion d'anneau de 100° à 170°.

10. Dispositif de commande manuelle (10) selon la revendication 5, **caractérisé en ce qu'**il comprend un guide de lumière (64) dont une entrée (65) est positionnée en vis-à-vis de la source lumineuse (62) et tel que le guide de lumière (64) traverse la plateforme (50) au niveau de la zone de transmission lumineuse (56).

11. Dispositif de commande manuelle (10) selon l'une des revendications précédentes, **caractérisé en ce que** le guide lumière comprend une pluralité de plots de conduction lumineuse (64a), les différents plots (64a) étant supportés et reliés entre eux par un anneau de support (67).

12. Dispositif de commande manuelle (10) selon l'une des revendications précédentes, **caractérisé en ce que** l'unité électronique comprend un circuit imprimé positionné sur le socle (11) et sous la plateforme (50).

13. Dispositif de commande manuelle (10) selon l'une des revendications précédentes, **caractérisé en ce que** la plateforme comprend une surface de support (51) et un rebord (52) périphérique, le module photovoltaïque étant logé sur la surface de support et à l'intérieur du rebord (52) périphérique.

14. Dispositif de commande manuelle (10) selon l'une des revendications précédentes, **caractérisé en ce que** le pourtour translucide du module photovoltaïque (30) présente une surface texturée.
